# EUROPEAN PATENT SPECIFICATION

(11) **EP 3 012 230 B1**
(45) Date of publication and mention of the grant of the patent: **28.02.2018**
(21) Application number: 15190528.8
(22) Date of filing: 20.10.2015
(51) Int. Cl.: C02F 1/42

(54) **METHOD AND APPARATUS FOR REDUCING REGENERANT AND WASTEWATER BY USING COMPRESSED AIR**
VERFAHREN UND VORRICHTUNG ZUR REDUZIERUNG VOM REGENERIERMITTEL UND ABWASSER MIT DRUCKLUFT
PROCÉDÉ ET APPAREIL DE RÉDUCTION RÉGÉNÉRANT ET DES EAUX USÉES EN UTILISANT DE L'AIR COMPRIMÉ

(30) Priority: 22.10.2014 TW 103136511
(43) Date of publication of application: 27.04.2016
(73) Proprietor: Youwan Trading Co., Ltd, Taoyuan City (TW)
(72) Inventor: WANG, Sz-Lung, Taoyuan City (TW)
(74) Representative: Gervasi, Gemma

(56) References cited:
- GB-A- 1 261 074
- GB-A- 1 519 489
- US-A1- 2012 305 488
- US-B2- 8 658 036

## Description

### 1. Field of the Invention

The present invention relates to an apparatus and method of a resin tower, more particularly to an apparatus and water-saving method for reducing the regenerant and wastewater by compressed air.

### 2. Description of the Prior Arts

Ion exchange resin system utilizes the resin with ion exchange function to carry out ion exchange, so as to remove undesired impurities and recycle reusable substances from the waste fluid. A typical operating cycle of the ion exchange resin comprises the steps of service, backwash, regeneration and rinse. Take the cation exchange resin as an example, the amount of the wastewater produced during the regeneration process usually reaches 18 bed volumes (BV). For anion exchange resin, the amount of the wastewater produced during the regeneration process usually reaches 14.7 BV.

The regenerant used in the prior art includes brine, 5% to 20% of acid or base. After the regenerant reacted with the ion exchange resin, the spent regenerant typically contains the adsorbed ions. Especially, when the ion exchange resin is used to remove the heavy metal ions in the metal plating waste fluid, the concentration of the copper or nickel ions in the rinse water and spent regenerant will be changed from 100 ppm up to within 1000 ppm to 5000 ppm after regenerating the ion exchange resin.

In theory, the equivalent of the regenerant required in the regeneration step should be equal to the total equivalent of the ions adsorbed onto the ion exchange resin. However, in practice, due to the differences among the ion selectivity, the tiny pore of the ion exchange resin, and the water remaining in the pipeline and ion exchange resin tower, the amount of the regenerant should be increased to multiple folds of the volume of the ion exchange resin tower to complete the regeneration in the existing technology.

As disclosed in United State Patent Publication No. 5,776,340, an apparatus and a method for effectively recovering rinse water are disclosed. However, the prior publication does not disclose how to increase the concentration of the spent regenerant.

The document GB 1519489 gives another example of an apparatus and a method for regenerating ion exchange resins known from the prior art.

- Therefore, there is still a need to increase the concentration of the spent regenerant, cost down the process and reduce amount of the discharged wastewater, so as to reduce the pollution in the environment.

The objective of the present invention is to minimize the total amount of the pure water required in the process of the ion exchange resin tower and the regenerant required in the regeneration step and increase the concentration of the adsorbed substances, that is, undesired impurities and reusable substances contained in the spent regenerant discharged from the ion exchange resin tower, thereby increasing the concentration factor of the adsorbed substances between influent waste fluid and spent regenerant, concentrating and separating metal from high COD wastewater, recycling metal or other useful resources from the high concentration spent regenerant, and reducing the pollution in our environment.

To achieve the foresaid objective, the present invention provides a method for reducing spent regenerant and wastewater by compressed air. The method comprises the steps in the sequence set forth:
a first service step: feeding waste fluid or tap water from the waste fluid/tap water tank into a resin tower packed with resin material through the upper opening or the lower opening to allow the resin material to adsorb substances in the waste fluid or tap water and to discharge a treated water and a treated wastewater out of the resin tower;
a first air-intake and drain step: supplying compressed air from a compressed air supply (3) into the resin tower through an upper opening of the resin tower, so as to discharge the waste fluid or tap water out of the resin tower;
a first assistant drain step: feeding pure water from a pure water tank into the resin tower through the upper opening of the resin tower, and then supplying compressed air from the compressed air supply into the resin tower through the upper opening of the resin tower, so as to discharge the waste fluid or tap water out of the resin tower;
a first rinse and backwash step: feeding pure water from the pure water tank into the resin tower through the upper opening of the resin tower, and then feeding pure water from the pure water tank into the resin tower through a lower opening of the resin tower, so as to rinse and backwash the resin tower and to discharge a rinse wastewater and a treated wastewater;
a second air-intake and drain step: supplying compressed air from the compressed air supply into the resin tower through the upper opening of the resin tower, so as to discharge the treated wastewater out of the resin tower;
a first regeneration step: feeding a fresh regenerant from the regenerant tank into the resin tower through the upper opening or lower opening of the resin tower to produce a spent regenerant;
a third air-intake and drain step: supplying compressed air from the compressed air supply into the resin tower through the upper opening of the resin tower, so as to discharge the spent regenerant out of the resin tower;
a second assistant drain step: feeding pure water from the pure water tank into the resin tower through the upper opening of the resin tower, and then supplying compressed air from the compressed air supply into the resin tower through the upper opening of the resin tower, so as to discharge the spent regenerant out of the resin tower;
a first rinse step: feeding pure water from the pure water tank into the resin tower through the upper opening of the resin tower, so as to rinse the spent regenerant out of the resin tower and produce rinse wastewater, wherein the rinse wastewater comprises a part of the foresaid spent regenerant;
a fourth air-intake and drain step: supplying compressed air from the compressed air supply into the resin tower through the upper opening of the resin tower, so as to discharge the treated wastewater out of the resin tower and complete the entire process of the resin tower,
wherein the drain method during the first service step to the fourth air-intake and drain step is performed depending on the concentration of adsorbed substances contained in a stream of the waste fluid, the treated water, the treated wastewater, the tap water, the rinse wastewater, or the spent regenerant;
wherein the concentration of the adsorbed substances contained in the drain stream discharged into the rinse water collection tank (9) is the lowest, and followed by the stream discharged into the regenerant tank (4)and the stream discharged into the regenerant recovery tank (7) in an increasing order;
wherein the stream from the regenerant recovery tank (7) is fed into the collection tank (8).

By adopting the first air-intake and drain step and the first assistant drain step, the total amount of the pure water required in the subsequent rinse and backwash step is largely reduced, and the total amount of the produced wastewater is reduced as well. More specifically, the pure water required in the entire process of the resin tower can be reduced to within 4 BV and 6 BV to complete the regeneration of the ion exchange resin. Further, the spent regenerant discharged from the resin tower is reusable in the next regeneration step.

In accordance with the present invention, the first air-intake and drain step, first assistant drain step, first rinse and backwash step, second air-intake and drain step can be optionally performed if only required to increase the concentration of the adsorbed substances contained in the spent regenerant.

Preferably, the total volume of the fresh regenerant used in the first regeneration step is lower than the total volume of the resin material in the resin tower.

Preferably, the first assistant drain step comprises multiple cycles, and each cycle comprises the foresaid two steps of feeding pure water into the resin tower through the upper opening of the resin tower and of supplying compressed air into the resin tower through the upper opening of the resin tower.

Preferably, the first assistant drain step comprises multiple cycles, and each cycle comprises the steps of: (i) feeding pure water into the resin tower through the upper opening of the resin tower and discharging the solution to a predetermined drain valve; (ii) supplying compressed air into the resin tower through the upper opening of the resin tower and discharging the solution to the predetermined drain valve; and (iii) opening the upper inlet valve, lower inlet valve and the predetermined drain valve to discharge the compressed air, waste fluid, or tap water out of the resin tower.

Similarly, the second assistant drain step comprises multiple cycles, and each cycle comprises the steps of: (i) feeding pure water into the resin tower through the upper opening of the resin tower and discharging the solution to a predetermined drain valve; (ii) supplying the compressed air into the resin tower through the upper opening of the resin tower and discharging the solution to the predetermined drain valve; and (iii) opening upper inlet valve, lower inlet valve and the predetermined drain valve to discharge the compressed air and spent regenerant out of the resin tower.

Accordingly, the waste fluid, tap water, or spent regenerant could be discharged as much as possible, thereby being more beneficial to perform the subsequent rinse and backwash step and the regeneration step.

Preferably, between the first service step and the first assistant drain step, the method comprises performing the first air-intake and drain step, and then performing the first assistant drain step repeatedly for multiple times, so as to discharge all of the solutions including the waste fluid, tap water, or rinse water out of the resin tower. Preferably, between the first rinse and backwash step and the first regeneration step, the method comprises performing the second air-intake and drain step, so as to discharge all of the rinse water out of the resin tower. Preferably, between the first regeneration step and the second assistant drain step, the method comprises performing the third air-intake and drain step, and then performing the second assistant drain step repeatedly for multiple times, so as to discharge all of the spent regenerant out of the resin tower. Preferably, after the first rinse step, the method comprises performing the fourth air-intake and drain step, so as to discharge all of the rinse water out of the resin tower.

Preferably, a volume of the pure water used in the first assistant drain step ranges from 0.01 vol% to 50 vol% based on the total volume of the ion exchange resin in the resin tower, and a volume of the pure water used in the second assistant drain step also ranges from 0.01 vol% to 50 vol% based on the total volume of the resin material in the resin tower. More preferably, the volume of the pure water used in the first assistant drain step or used in the second assistant drain step ranges from 0.1 vol% to 40 vol% based on the total volume of the ion exchange resin in the resin tower.

Preferably, during the first or second assistant drain step, the compressed air is supplied through the upper opening of the resin tower continuously, so as to continuously discharge the waste fluid or tap water from 0.1 seconds to 1200 seconds, and then the foresaid steps (i), (ii), and (iii) were repeatedly performed as a cycle for at least once to fifty times.

Preferably, after the end of the service step and the regeneration step, the air-intake and drain step and the assistant drain step can be performed alternatively. More preferably, the air-intake and drain step and the assistant drain step can be performed together.

Preferably, at the beginning of the regeneration step, the discharged spent regenerant can be optionally discharged into a rinse water collection tank to reduce the amount of the rinse water flowing into the regenerant tank. Accordingly, the objectives of reducing the usage of the regenerant and increasing the concentration of the desired recovered substances can be achieved. More preferably, the waste fluid, tap water, spent regenerant or the rinse water during the foresaid steps can be discharged into a regenerant recovery tank, a regenerant tank, a rinse water collection tank, or a wastewater treatment tank depending on the desired concentration of the recovered substances and the required quality of the solution.

Preferably, the first regeneration step comprises the step of discharging the spent regenerant into a rinse water collection tank, a regenerant tank or a regenerant recovery tank depending on the concentration of desired adsorbed substances contained in the spent regenerant. The rinse water collection tank is connected with the upper opening and the lower opening of the resin tower, the regenerant tank is connected with the upper opening and the lower opening of the resin tower, and the regenerant recovery tank is connected with the upper opening or the lower opening of the resin tower.

Preferably, the first rinse step comprises the step of discharging the rinse water into a regenerant tank and a rinse water collection tank. The rinse water collection tank is connected with the upper opening and the lower opening of the resin tower, and the regenerant tank is connected with the upper opening and the lower opening of the resin tower.

Preferably, the method may comprise multiple repeated cycles including the foresaid steps. More specifically, the method comprises the following steps after the fourth air-intake and drain step:
a second service step: the second service step is a repetition of the first service step;
a fifth air-intake and drain step: the fifth air-intake and drain step is a repetition of the first air-intake and drain step;
a third assistant drain step: the third assistant drain step is a repetition of the first assistant drain step;
a second rinse and backwash step: the second rinse and backwash step is a repetition of the first rinse and backwash step;
a sixth air-intake and drain step: the sixth air-intake and drain step is a repetition of the second air-intake and drain step;
a second regeneration step: the second regeneration step is a repetition of the first regeneration step;
a seventh air-intake and drain step: the seventh air-intake and drain step is a repetition of the third air-intake and drain step;
a fourth assistant drain step: the fourth assistant drain step is a repetition of the second assistant drain step;
a second rinse step: the second rinse step is a repetition of the first rinse step; and
an eighth air-intake and drain step: the air-intake and drain step is a repetition of the fourth air-intake and drain step;
wherein the fresh regenerant fed into the resin tower through the lower opening or the upper opening during the second regeneration step partially includes the spent regenerant collected from the first regeneration step to the first rinse step. In addition, the regenerant also can be collected from the spent regenerant discharged during the third air-intake and drain step, the second assistant drain step, and the beginning of the first rinse step; or the rinse water contains concentrated spent regenerant, and is to be reused as the make-up source of fresh regenerant during the next regeneration step. The concentrated fresh regenerant can be added directly or by using a venturi tube.

Accordingly, the spent regenerant collected from the first entire process of the resin tower can be mixed with fresh regenerant, such as a regenerant with higher concentration, to prepare fresh regenerant having desired concentration, so as to be reused in the next regeneration step. More preferably, the recovered regenerant can be reused once to five times after mixing with concentrated fresh regenerant. The amount of the concentrated fresh regenerant supplemented during the next regeneration step is only half of or less than the amount of the concentrated fresh regenerant used in the first regeneration step.

Preferably, the method performs the air-intake and drain step after the rinse and backwash step or the rinse step, such that the cleaned rinse water remaining in the ion resin exchange tower and the pipe can be collected in the rinse water collection tank.

More preferably, during the process of the resin tower, the rinse water discharged from the upper opening or the lower opening of the resin tower is discharged into the rinse water collection tank when the rinse water contains lower adsorbed substances.

Preferably, the method comprises the step of recycling the rinse water produced from the first service step to the fourth air-intake and drain step to obtain a recycled rinse water, and the second service step comprises the step of feeding the recycled rinse water into the resin tower to allow the ion exchange resin to adsorb substances in the recycled rinse water, such that the rinse water can be reused in next step.

Preferably, the service step and the regeneration step can be performed with inner circulation cycles, allowing the ion exchange resin in the resin tower to adsorb or be regenerated more completely. The amount of the pure water and the regenerant during the regeneration step can be thus reduced.

Besides, the present invention also provides an apparatus for reducing regenerant and wastewater by compressed air. The apparatus comprises:
a resin tower having an upper opening and a lower opening opposite the upper opening, and packed with a resin material including strong acid cation exchange resin, weak acid cation exchange resin, strong base anion exchange resin, weak base anion exchange resin, selective ion exchange resin, chelating resin, or adsorber resin;
a waste fluid/tap water tank connected with the upper opening or the lower opening of the resin tower, so as to unidirectionally supply waste fluid/tap water to the resin tower;
a compressed air supply connected with the upper opening of the resin tower, so as to unidirectionally supply compressed air to the resin tower;
a regenerant tank connected with the upper opening and the lower opening of the resin tower, so as to bidirectionally supply fresh regenerant to the resin tower and to drain spent regenerant from the resin tower;
a pure water tank connected with the upper opening and the lower opening of the resin tower, so as to unidirectionally supply pure water to the resin tower;
a wastewater treatment tank connected with the upper opening and the lower opening of the resin tower, so as to unidirectionally drain wastewater out of the resin tower;
a regenerant recovery tank connected with the upper opening, so as to unidirectionally drain spent regenerant from the resin tower;
a collection tank connected with the regenerant recovery tank; and
a rinse water collection tank connected with the upper opening and the lower opening of the resin tower, so as to bidirectionally supply collected rinse water to the resin tower and to drain the rinse wastewater from the resin tower.

Preferably, the apparatus comprises a main pump, an upper inlet valve, and a lower inlet valve. The main pump is located at a common pipeline of the waste fluid/tap water tank, the regenerant tank, the pure water tank, and the rinse water collection tank connected with the resin tower, the upper inlet valve is located at the pipe connected with the resin tower and the main pump, the lower inlet valve is located at the pipe connected with the resin tower and the main pump.

Preferably, the resin tower is packed with resin material for ion exchange. Said resin material may be strong acid cation exchange resin, weak acid cation exchange resin, strong base anion exchange resin, weak base anion exchange resin, selective ion exchange resin, chelating resin, or adsorber resin.

Preferably, various regenerants can be optionally adopted according to the type of the ion exchange resin. Examples of the regenerant may be brine such as sodium chloride solution, acidic solution such as sulfuric acid solution and hydrochloric acid, alkaline solution such as sodium hydroxide, or organic solvent such as methanol. The concentration of the acid or basic solution ranges from 5 wt% to 20 wt%.

Preferably, the required fresh regenerant can be fed into the resin tower through the lower opening by using the venturi tube. Or, the required amount of fresh regenerant can be added directly into the regenerant tank. More preferably, the amount of the rinse water and adsorbed substances flowing into the regenerant tank is decreased, so as to increase the concentration of the spent regenerant collected in the regenerant recovery tank.

Preferably, the solution produced at the beginning of the first air-intake and drain step, the first assistant drain step, the first rinse and backwash step, and the first rinse step is discharged into the rinse water collection tank, so as to be treated in the next service step.

Other objectives, advantages and novel features of the invention will become more apparent from the following detailed description when taken in conjunction with the accompanying drawings.

### IN THE DRAWINGS

FIG. 1 is a schematic connection view of an apparatus for reducing regenerant and wastewater by using compressed air;
FIG. 2 is an exemplary pipeline schematic view of the apparatus for reducing regenerant and wastewater by using compressed air; and
FIG.3 is a block diagram of a method for reducing regenerant and wastewater by using compressed air.

Hereinafter, one skilled in the arts can easily realize the advantages and effects of an apparatus and a process for reducing regenerant and wastewater by using compressed air in accordance with the present invention from the following examples. Therefore, it should be understood that the descriptions proposed herein are just preferable examples only for the purpose of illustrations, not intended to limit the scope of the invention. Various modifications and variations could be made in order to practice or apply the present invention without departing from the spirit and scope of the invention.

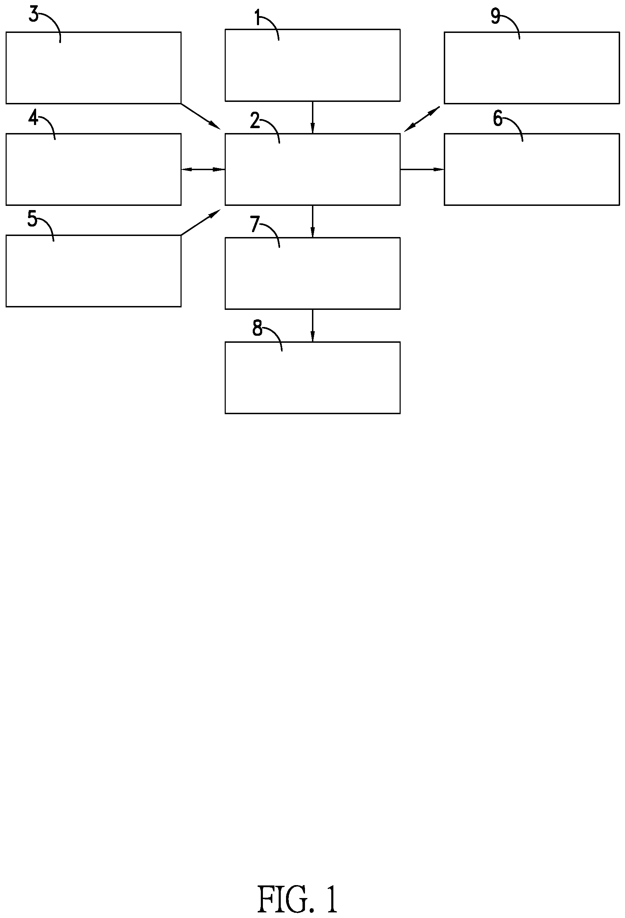

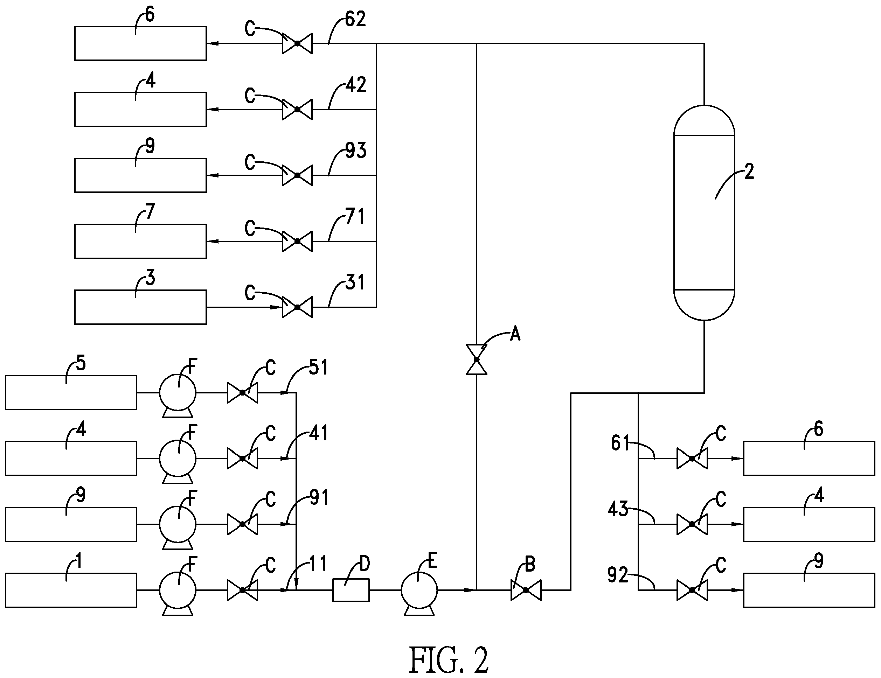

With reference to FIGs. 1 and 2, the apparatus for reducing regenerant and wastewater by using compressed air comprises a waste fluid/tap water tank 1, an ion exchange resin tower 2, a compressed air supply 3, a regenerant tank 4, a pure water tank 5, a wastewater treatment tank 6, a regenerant recovery tank 7, a collection tank 8, and a rinse water collection tank 9.

As the single or double headed arrows shown in FIG. 1, the ion exchange resin tower 2 has an upper opening and a lower opening. The waste fluid/tap water tank 1 is connected with the ion exchange resin tower 2 unidirectionally, such that the waste fluid or tap water in the waste fluid/tap water tank 1 is fed into the ion exchange resin tower 2 through its upper opening or lower opening. The compressed air supply 3 is also connected with the ion exchange resin tower 2 unidirectionally, such that the compressed air is passed into the ion exchange resin tower 2 through its upper opening. The regenerant tank 4 is connected with the ion exchange resin tower 2 bidirectionally. Said regenerant in the regenerant tank 4 can be fed into the ion exchange resin tower 2 through the lower opening, and the spent regenerant after regeneration is then discharged through the upper opening and flows back to the regenerant tank 4. Or, the spent regenerant remaining in the ion exchange resin tower 2 also can be discharged through the lower opening and flows back to the regenerant tank 4. The pure water tank 5 is connected with the ion exchange resin tower 2 unidirectionally, so as to feed the pure water into the ion exchange resin tower 2 through the upper or lower opening. The wastewater treatment tank 6 is connected with the ion exchange resin tower 2 unidirectionally, so as to discharge the wastewater into the wastewater treatment tank 6 from the upper opening or lower opening. The regenerant recovery tank 7 is connected with the ion exchange resin tower 2 unidirectionally, so as to discharge the spent regenerant through the upper opening or the lower opening and feed the spent regenerant back into the regenerant recovery tank 7. The regenerant recovery tank 7 is connected with the collection tank 8, so as to deliver the recovered regenerant to the collection tank 8. The rinse water collection tank 9 is connected with the ion exchange resin tower 2 bidirectionally, such that the rinse water can be discharged from the ion exchange resin tower 2 through the upper opening or lower opening and then flows into the rinse water collection tank 9, or the rinse water can be reused and fed into the ion exchange resin tower 2 through the upper opening or the lower opening.

More specifically, as shown in FIG. 2, the apparatus for reducing regenerant and wastewater by using compressed air optionally comprises an upper inlet pneumatic valve A, a lower inlet pneumatic valve B, multiple sub-pneumatic valves C, a flow meter D, a main pump E, and multiple assistant pumps F.

Said upper inlet pneumatic valve A is located at the pipe connected with the ion exchange resin tower 2 and the main pump E, so as to control whether the waste fluid or tap water in the waste fluid/tap water tank 1, the pure water in the pure water tank 5, or the rinse water in the rinse water collection tank 9 is allowed to flow into the ion exchange resin tower 2 through the upper opening.

Said lower inlet pneumatic valve B is located at the pipe connected with the ion exchange resin tower 2 and the main pump E, so as to control whether the waste fluid or tap water in the waste fluid/tap water tank 1, the regenerant in the regenerant tank 4, the pure water in the pure water tank 5, or the rinse water in the rinse water collection tank 9 is allowed to flow into the ion exchange resin tower 2 through the lower opening. The upper inlet pneumatic valve A and the lower inlet pneumatic valve B are switched alternatively, so as to allow that the waste fluid, tap water, regenerant, pure water, or rinse water to flow into the ion exchange resin tower 2 through the upper opening or the lower opening.

Said sub-pneumatic valves C are respectively located at the respective pipes by which the ion exchange resin tower 2 is connected with the waste fluid/tap water tank 1, with the compressed air supply 3, connected with the regenerant tank 4, with the pure water tank 5, connected with the wastewater treatment tank 6, with the regenerant recovery tank 7, and with the rinse water collection tank 9, so as to control the solution fed into or discharged from the ion exchange resin tower 2 or to control the compressed air flowing into the ion exchange resin tower 2. Besides, the sub-pneumatic valve C connected with the compressed air supply 3 is mounted at the air pipe 31, so as to switch on or off the air pipe 31 by which the compressed air supply 3 is connected to the ion exchange resin tower 2. When the compressed air is fed in the air pipe 31, the regenerant, rinse water, waste fluid, or tap water remaining in the pipe can be discharged therefrom as well. Further, the sub-pneumatic valve C connected with the pure water tank 5 is mounted at a pure water pipe 51, so as to switch on or off the pure water pipe 51 by which the pure water tank 5 is connected to the ion exchange resin tower 2. When the pure water flows through the pure water pipe 51, the spent regenerant, rinse water, waste fluid, or tap water in the pipe can be flushed and flows to the ion exchange resin tower 2 as well.

Said flow meter D is located at the common pipe of the waste fluid/tap water tank 1, the regenerant tank 4, the pure water tank 5, and the rinse water collection tank 9 connected with the main pump E, so as to measure the amounts of the waste fluid, of the tap water, of the fresh regenerant, of the pure water, or of the rinse water. The common pipeline is connected with a waste fluid/tap water pipe 11, a first regenerant pipe 41, the pure water pipe 51, and a first rinse water pipe 91.

Said main pump E is located at the common pipeline of the waste fluid/tap water tank 1, the regenerant tank 4, the pure water tank 5, and the rinse water collection tank 9 connected with the ion exchange resin tower 2, so as to push the solution of the foresaid tanks to flow into the ion exchange resin tower 2.

Said assistant pumps F are respectively located at the waste fluid/tap water pipe 11 by which the waste fluid/tap water tank 1 is connected with the sub-pneumatic valve C, the first regenerant pipe 41 by which the regenerant tank 4 is connected with the sub-pneumatic valve C, the pure water pipe 51 by which the pure water tank 5 is connected with the sub-pneumatic valve C, and the first rinse water pipe 91 by which the rinse water collection tank 9 is connected with the sub-pneumatic valve C, for pumping the waste fluid, the tap water, the fresh regenerant, the pure water, or the rinse water from their respective tanks.

### Example 1

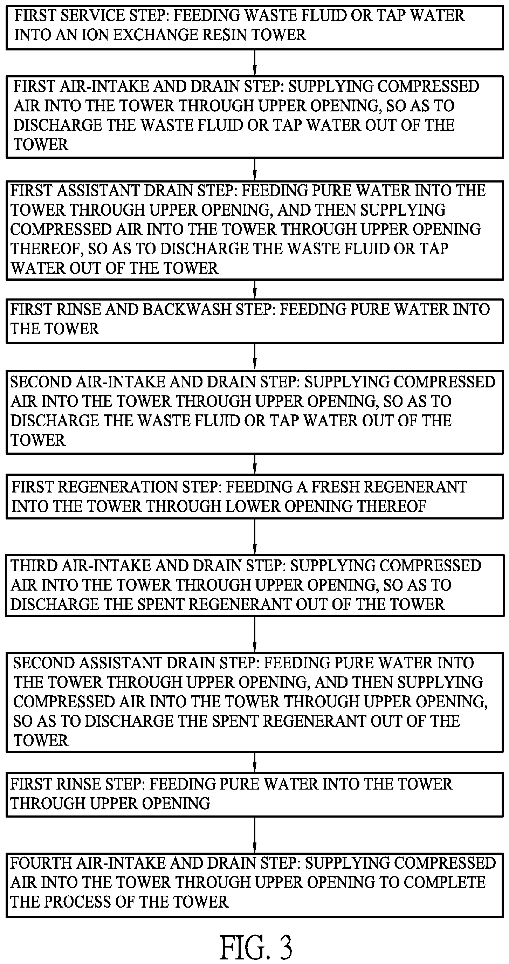

With reference to FIGs. 2 and 3, an electroless nickel plating waste fluid, i.e., waste fluid, is processed by the apparatus and the method for reducing regenerant and wastewater by using compressed air, so as to recover the reusable nickel sulfate. Said process was implemented through the steps as follows.

### (a) First service step:

First, the upper inlet pneumatic valve A and the sub-pneumatic valve C located at the waste fluid/tap water pipe 11 were switched on. The electroless nickel plating waste fluid collected in the waste fluid/tap water tank 1 was pumped by the main pump E and the assistant pump F, and passed through the waste fluid/tap water pipe 11 and then fed into the ion exchange resin tower 2 of 200L through the upper opening. The flow rate of the electroless nickel plating waste fluid was set at 12 L/min, such that the nickel ions, i.e. the substance to be adsorbed, contained in the electroless nickel plating waste fluid were adsorbed by the selective ion exchange resin of the ion exchange resin tower 2 during the service step. The electroless nickel plating waste fluid contained 4.9 g/L of nickel ions, 140 g/L of sodium phosphite and sodium hypophosphite, and 72 g/L of organic acid chelating agents, the organic acid chelating agents comprised lactic acid, glycolic acid, and succinic acid.

During the service step, the nickel content of the electroless nickel plating waste fluid was measured by titration before or after passing the ion exchange resin tower 2 to determine whether the ion exchange resin of the ion exchange resin tower 2 had become saturated with nickel ions. Results of the nickel content changed with the passing time were recorded in the Table 1.

**Table 1: the amount of the electroless nickel plating waste fluid (referred to as "waste fluid") and the nickel content of the electroless nickel plating waste fluid before or after passing the ion exchange resin tower (referred to as "tower") changed with the time of the electroless nickel plating waste fluid fed into the ion exchange resin tower**

| Time of feeding the waste fluid into the tower | Amount of the waste fluid fed in the tower | Nickel content of the waste fluid before passing the tower | Nickel content of the waste fluid after passing the tower |
|---|---|---|---|
| 0 min | 0 L | 4.9 g/L | < 0.1 g/L |
| 15 min | 180 L | 4.9 g/L | < 0.1 g/L |
| 30 min | 360 L | 4.9 g/L | < 0.1 g/L |
| 45 min | 540 L | 4.9 g/L | < 0.1 g/L |
| 60 min | 720 L | 4.9 g/L | < 0.1 g/L |
| 90 min | 1080 L | 4.9 g/L | < 0.1 g/L |
| 97 min | 1176 L | 4.9 g/L | 0.3 g/L |

During the step, the electroless nickel plating waste fluid discharged from the lower opening of the ion exchange resin tower 2 was discharged to different tanks depending on its nickel content. As shown in Table 1, when the total amount of the processed electroless nickel plating waste fluid was less than 1080 L, the nickel content of the electroless nickel plating waste fluid discharged from the ion exchange resin tower 2 was lower than 0.1 g/L. At this time, the sub-pneumatic valve C located at the first wastewater pipe 61 was switched on, and the electroless nickel plating waste fluid of said concentration passed through the first wastewater pipe 61 and was discharged into the wastewater treatment tank 6. With the amount of the electroless nickel plating waste fluid fed into the ion exchange resin tower 2 increased, more nickel ions had been adsorbed onto the ion exchange resin, such that the electroless nickel plating waste fluid discharged from the ion exchange resin tower 2 increased up to about 0.3 g/L. At this time, the sub-pneumatic valve C located at the second rinse water pipe 92 was switched on to allow the electroless nickel plating waste fluid to flow through the second rinse water pipe 92 and discharge to the washed water collection tank 9.

After the ion exchange resin packed in the ion exchange resin tower 2 had reached a saturation state, the upper inlet pneumatic valve A and the sub-pneumatic valve C located at the first rinse water pipe 91 were switched on, the rinse water in the rinse water collection tank 9 was passed through the first rinse water pipe 91 and fed into the ion exchange resin tower 2 through the upper opening and then discharged back into the rinse water collection tank 9 for undergoing inner circulation cycles. After the continuous cycles, all ion exchange resin was adsorbed with impurity, thus the rinse water discharged to the rinse water collection tank 9 contained 2.4 g/L of nickel ion, had a chemical oxygen demand (COD, which was measured by photometry (Merck)) of 65 g/L and a conductivity of 63.2 mS/cm.

### (b) First air-intake and drain step:

Next, the sub-pneumatic valve C located at the air pipe 31 was switched on to allow the compressed air (about 5 kg/cm²) of the compressed air supply 3 to pass through the air pipe 31 and into the ion exchange resin tower 2 through the upper opening for 750 seconds to drain the electroless nickel plating waste fluid from the ion exchange resin tower 2. At this time, the sub-pneumatic valve C located at the second rinse water pipe 92 was switched on and the electroless nickel plating waste fluid was discharged into the rinse water collection tank 9 through the second rinse water pipe 92.

### (c) First assistant drain step:

Then the upper inlet pneumatic valve A and the sub-pneumatic valve C located at the pure water pipe 51 were switched on to allow the pure water in the pure water tank 5 to pass through the pure water pipe 51 and be fed into the ion exchange resin tower 2 through the upper opening for 30 seconds with a flow rate of 16 L/min. The solution discharged from the ion exchange resin tower 2 was discharged into the rinse water collection tank 9. After switching on the sub-pneumatic valve C located at the air pipe 31, the compressed air (about 5 kg/cm²) of the compressed air supply 3 was supplied into the ion exchange resin tower 2 through the upper opening for 60 seconds, so as to drain the electroless nickel plating waste fluid in the ion exchange resin tower 2 and discharged the electroless nickel plating waste fluid into the rinse water collection tank 9 through the second rinse water pipe 92. After supplying the compressed air, the upper inlet pneumatic valve A and the lower inlet pneumatic valve B were opened for drain. The foresaid three steps of feeding pure water, supplying compressed air, and exhausting compressed air were repeated for seven times to complete the first assistant drain step.

### (d) First rinse and backwash step:

Subsequently, the upper inlet pneumatic valve A, the sub-pneumatic valve C located at the pure water pipe 51, the main pump E, and the assistant pump F were switched on. The pure water in the pure water tank 5 was pumped by the main pump E and the assistant pump F, and passed through the pure water pipe 51 and fed into the ion exchange resin tower 2 through the upper opening, so as to flush the ion exchange resin tower 2. Then the main pump E was switched off to wash the ion exchange resin tower 2 slowly. After that, the upper inlet pneumatic valve A was switched off, and the lower inlet pneumatic valve B, the sub-pneumatic valve C located at the pure water pipe 51, the main pump E, and the assistant pump F were switched on, such that the pure water in the pure water tank 5 flowed through the pure water pipe 51 and was fed into the ion exchange resin tower 2 through the lower opening, so as to backwash the ion exchange resin tower 2.

According to different nickel contents of the rinse water produced during the flush, slow-rinse, and backwash steps, the rinse water was discharged into different tanks and pure water was fed at different flow rates. In practice, when the nickel content of the rinse water was over 0.18 g/L, both the main pump E and the assistant pump F were used to feed the pure water into the ion exchange resin tower 2 through the upper opening at 16 L/min, so as to flush the ion exchange resin tower 2. The rinse water produced during the flush step was discharged into the rinse water collection tank 9 through the second rinse water pipe 92. The flush step was stopped until the nickel content of the rinse water was decreased to 0.18 g/L. When the nickel content of the rinse water was lower than 0.18 g/L, only the assistant pump F was used to feed the pure water into the ion exchange resin tower 2 through the upper opening at 9.3 L/min, so as to wash the ion exchange resin tower 2 slowly. During the slow-rinse step, the sub-pneumatic valve C located at the first wastewater pipe 61 was switched on to allow the rinse water to discharge into the wastewater treatment tank 6 through the first wastewater pipe 61. When the conductivity of the rinse water was decreased to 1000 µS/cm, the slow-rinse step was ended. When the conductivity of the rinse water was lower than 1000 µS/cm, the flow rate of the pure water was set at 16 µS/cm again, and fed into the ion exchange resin tower 2 through the lower opening, so as to backwash the ion exchange resin tower 2. At this time, the sub-pneumatic valve C located at the second wastewater pipe 62 was switched on to allow the pure water produced during the backwash step to pass through the second wastewater pipe 62 and be discharged into the wastewater treatment tank 6. Said backwash step was ended when the discharged rinse water became clear and substantially free of suspended solids observed by naked eyes.

In the instant example, the amounts of the pure water fed into the ion exchange resin tower 2 during the flush, slow-rinse, and backwash steps were recorded in the Table 2.

**Table 2: the amounts of the pure water fed into the ion exchange resin tower during the flush, slow-rinse, and backwash steps of the Examples 1 and 5 and Comparative Examples 1 and 2**

| | Amount of pure water | | Amount of the pure water fed during the backwash step | Total amount of the pure water during three steps |
|---|---|---|---|---|
| | Flush step | Slow-rinse step | | |
| Example 1 | 130 L | 110 L | 80 L | 320 L |
| Example 5 | -- | 280 L | 80 L | 360L |
| Comparative Example 1 | -- | -- | 700 L | 700 L |
| Comparative Example 2 | 250 L | 110 L | 80 L | 450 L |

### (e) Second air-intake and drain step:

As stated above in the step (b), the sub-pneumatic valve C located at the pipe 31 was switched on to allow the compressed air of the compressed air supply 3 to pass through the pipe 31 and into the ion exchange resin tower 2 through the upper opening, so as to drain the rinse water out of the ion exchange resin tower 2. At this time, the sub-pneumatic valve C located at the second rinse water pipe 92 was switched on to allow the rinse water to discharge into the rinse water collection tank 9 through the second rinse water pipe 92.

### (f) Second rinse and backwash step:

In order to wash the ion exchange resin tower 2 more completely, the foresaid step (d) could be repeated optionally. In the instant example, after step (e), the pure water in the pure water tank 5 was passed through the pure water pipe 51 and fed into the ion exchange resin tower 2 through the upper opening again, so as to flush the ion exchange resin tower 2. After that, the pure water in the pure water tank 5 was passed through the pure water pipe 51 and fed into the ion exchange resin tower 2 through the lower opening, so as to backwash the ion exchange resin tower 2. At this step, the rinse water was discharged into the wastewater treatment tank 6.

### (g) First regeneration step:

After switching on the lower inlet pneumatic valve B and the sub-pneumatic valve C located at the pipe 41, 360 L and 17 wt% of sulfuric acid, as the fresh regenerant, in the regenerant tank 4 flowed through the pipe 41 and was fed into the ion exchange resin tower 2 through the lower opening.

During the step, the spent regenerant discharged from the upper opening of the ion exchange resin tower 2 was discharged into different tanks depending on its nickel content. In practice, at the initial stage of the regeneration, when the nickel content of the spent regenerant was lower than 2 g/L, the sub-pneumatic valve C located at the third rinse water pipe 93 was switched on to allow the spent regenerant to discharge from the upper opening into the rinse water collection tank 9 through the third rinse water pipe 93, so as to avoid the rinse water with less nickel content being discharged into the regenerant tank 4. When the nickel content of the spent regenerant increased to 2 g/L, the sub-pneumatic valve C located at the second regenerant pipe 42 was switched on to allow the spent regenerant to discharge from the upper opening into the regenerant tank 4 through the second regenerant pipe 42. The inner circulation cycles were performed until completion of the regeneration. Herein, the spent regenerant discharged from the upper opening of the ion exchange resin tower 2 contained 22.4 g/L of nickel ion.

### (h) Third air-intake and drain step:

After regeneration, as stated in step (b), the compressed air of the compressed air supply 3 was passed through the pipe 31 and supplied into the ion exchange resin tower 2 through the upper opening, so as to drain the spent regenerant out of the ion exchange resin tower 2 and discharge the spent regenerant from the lower opening into the regenerant tank 4 through the third regenerant pipe 43.

### (i) Second assistant drain step:

As stated in the step (c), the pure water in the pure water tank 5 passed through the pure water pipe 51 and was fed into the ion exchange resin tower 2 through the upper opening. Then the compressed air was supplied into the ion exchange resin tower 2 through the upper opening, so as to discharge the spent regenerant in the ion exchange resin tower 2 into the regenerant tank 4 as much as possible. After completing the step of supplying compressed air, the upper inlet pneumatic valve A and the lower inlet pneumatic valve B were opened for exhausting air to the regenerant tank 4 for 30 seconds. The foresaid three steps were repeated for multiple times to complete the second assistant drain step.

### (j) First rinse step:

After that, the upper inlet pneumatic valve A and the sub-pneumatic valve C located at the pure water pipe 51 were switched on, such that the pure water in the pure water tank 5 flowed through the pure water pipe 51 and was fed into the ion exchange resin tower 2 through the upper opening, so as to rinse the rinse water out of the ion exchange resin tower 2.

During this step, the rinse water produced after rinsing the ion exchange resin tower 2 was discharged into different tanks according to the nickel content of the rinse water. In practice, when the nickel content of the rinse water was over 3 g/L, the pure water was fed into the ion exchange resin tower 2 through the upper opening to flush the ion exchange resin tower 2. The rinse water produced during the flush step was discharged into the regenerant tank 4 through the third regenerant pipe 43 to increase the solution level collected in the regenerant tank 4. When the nickel content of the rinse water was lower than 3 g/L, the ion exchange resin tower 2 was continued to be flushed, and the produced rinse water was discharged into the rinse water collection tank 9 through the second rinse water pipe 92. When the nickel content of the rinse water was decreased to lower than 0.18 g/L, the pure water was continuously fed into the ion exchange resin tower 2 through the upper opening but its flow rate was decreased, the produced rinse water during the slow-rinse step was discharged into the wastewater treatment tank 6 through the first wastewater pipe 61.

### (k) Fourth air-intake and drain step:

After completion of the rinse step, the sub-pneumatic valve C located at the pipe 31 was switched on to allow the compressed air of the compressed air supply 3 to pass through the pipe 31 and into the ion exchange resin tower 2 through the upper opening, so as to drain the rinse water from the ion exchange resin tower 2 into the rinse water collection tank 9 through the second rinse water pipe 92.

### (l) Third assistant drain step:

Subsequently, the upper inlet pneumatic valve A and the sub-pneumatic valve C located at the pure water pipe 51 were switched on to allow the pure water in the pure water tank 5 to pass through the pure water pipe 51 and be fed into the ion exchange resin tower 2 through the upper opening. Then the compressed air of the compressed air supply 3 passed through the pipe 31 and was supplied into the ion exchange resin tower 2 through the upper opening, thereby discharging the rinse water remaining in the ion exchange resin tower 2 into the rinse water collection tank 9 through the second rinse water pipe 92 as much as possible. Finally, after supplying the compressed air, the upper inlet pneumatic valve A and the lower inlet pneumatic valve B were opened to exhaust compressed air to the regenerant tank 4 for 30 seconds. The foresaid three steps of feeding pure water, supplying compressed air, and exhausting compressed air were repeated for multiple times to complete the entire process of the ion exchange resin tower 2.

### Example 2

The instant example adopted the same apparatus (as shown in FIG. 2) as stated in Example 1 to undergo the method for reducing regenerant and wastewater by using compressed air. The differences of the method between Examples 1 and 2 were that the method of Example 2 further included steps (a') to (l'), i.e. the second entire process of the ion exchange resin tower 2, after the steps (a) to (1), i.e. the first entire process of the ion exchange resin tower 2 as stated in Example 1.

The steps (a') to (l') were mainly respectively identical to the step (a) to (1) in the first entire process of the ion exchange resin tower 2. The differences were that the step (g') in the first entire process of the ion exchange resin tower 2 was performed as follows.

After the step (f'), the spent regenerant recovered from the step (g), which contained 22.4 g/L of nickel ion, was mixed with 16.4 L of sulfuric acid (98 wt%, as the concentrated regenerant) to prepare 376.4 L and 26.5 wt% of sulfuric acid solution (contained 21.4 g/L of nickel ions). The sulfuric acid solution of the concentration could be reused as the fresh regenerant for step(g').

Subsequently, as stated above in the step (g) of Example 1, the lower inlet pneumatic valve B and the sub-pneumatic valve C located at the first regenerant pipe 41 were switched on to allow 376.4 L of sulfuric acid solution (containing 21.4 g/L of nickel ions) in the regenerant tank 4 to flow through the first regenerant pipe 41 and be fed into the ion exchange resin tower 2 through the lower opening. As stated in the step (g), the spent regenerant produced during step (g') was also discharged into different tanks depending on its nickel content. Herein, the spent regenerant discharged from the upper opening of the ion exchange resin tower 2 contained 37 g/L of nickel ion. Accordingly, the spent regenerant collected in the regenerant recovery tank 7 could have a nickel content within 35 g/L to 50 g/L. Said spent regenerant could be filtered and discharged to the collection tank 8, so as to be recovered to prepare the reusable nickel sulfate.

By adopting the foresaid steps, the spent regenerant recovered from the first entire process of the ion exchange resin tower 2 could be reused in the next entire process of the ion exchange resin tower 2. According to the processing cycle, the original spent regenerant contained in the spent regenerant could be reused repeatedly, and the produced rinse water could be reused as well, so as to achieve the objectives of reducing the amounts of the spent regenerant and wastewater.

### Example 3

A similar process including the steps (a) to (1) as described in the Example 1 was also performed in the instant example. The difference between Examples 1 and 3 was that the step (g) of Example 3 was performed as described below.

303.6 L of the spent regenerant recovered from the previous regeneration step, i.e., nickel sulfate solution which contained 14.8 g/L of nickel ion, was mixed with 16.4 L of sulfuric acid (98 wt%, as the concentrated regenerant) to prepare 320 L and 17.5 wt% of sulfuric acid solution (containing 14 g/L of nickel ions). The sulfuric acid solution of the concentration could be reused as the fresh regenerant for step (g).

Subsequently, as stated above in the step (g) of Example 1, 330 L of sulfuric acid solution (containing 14 g/L of nickel ions) in the regenerant tank 4 flowed through the first regenerant pipe 41 and was fed into the ion exchange resin tower 2 through the lower opening, and then the spent regenerant was discharged out of the ion exchange resin tower 2 through its upper opening.

During the step, the spent regenerant discharged from the upper opening of the ion exchange resin tower 2 was discharged into different tanks according to its nickel content.

In practice, as listed in Table 3, at the first stage of the regeneration step, a part of the fresh regenerant (about 80 L) was fed into and fill the ion exchange resin tower 2. At this stage, no spent regenerant was discharged out of the ion exchange resin tower 2 through the upper opening. Feeding of the fresh regenerant was continued, and the first stage was ended and the process proceeded to the second stage until the ion exchange resin tower 2 was filled with the fresh regenerant.

At the beginning of the second stage, as the fresh regenerant was continued to be fed, the spent regenerant started to be discharged from the upper opening of the ion exchange resin tower 2. Because the discharged regenerant, i.e., the spent regenerant, only had a nickel content less than 2 g/L and appeared colorless to light green, about 80 L of the discharged regenerant was discharged into the rinse water collection tank 9 through the third rinse water pipe 93. When the nickel content of the discharged regenerant was higher than 2 g/L but lower than 30 g/L, i.e., the discharged regenerant appeared in light green to green, the discharged regenerant was discharged back to the regenerant tank 4 again to undergo inner circulation cycles. In this stage, the solution level collected in the regenerant tank 4 was kept at 160 L.

In the third stage of the regeneration step, when the nickel content of the discharged regenerant was increased to higher than 30 g/L, the discharged regenerant appeared in green to dark green, and then turned into green again. At this stage, the nickel content of the spent regenerant was highest compared to those collected during the other stages. 90 L of the discharged regenerant was discharged into the regenerant recovery tank 7 through the regenerant recovery pipe 71. Therefore, the solution level collected in the regenerant tank 4 was reduced to 70 L from 160 L. Said spent regenerant collected in the regenerant recovery tank 7 was further analyzed by titration to determine its nickel content. According to the analysis, the nickel content of the spent regenerant was 65 g/L, i.e., the spent regenerant contained 279.5 grams of nickel sulfate hexahydrate. The spent regenerant could be discharged to the collection tank 8 after filtration, so as to be recovered to the reusable nickel sulfate.

In the fourth stage of the regeneration step, when the nickel content of the discharged regenerant was gradually decreased but still higher than 30 g/L, the discharged regenerant was discharged back to the regenerant tank 4 again for inner circulation cycles to regenerate the ion exchange resin more completely. In this stage, the solution level collected in the regenerant tank 4 was kept at 70 L.

**Table 3: the solution level of the regenerant tank, the pH value and nickel content of the spent regenerant discharged from the ion exchange resin tower at different stages of the regeneration step.**

| | Change of solution level of regenerant tank (beginning/end) | Change of color of the discharged regenerant | pH value of the discharged regenerant (beginning/end) | Nickel content of discharged regenerant |
|---|---|---|---|---|
| Before regeneration of Step (g) | 320 L/320L | -- | -- | -- |
| Beginning of first stage of Step (g) | 320 L/240 L | -- | -- | -- |
| First stage of Step (g) | 240 L/160 L | Colorless to light green | pH 5.1/pH 4.5 | < 2 g/L |
| Second stage of Step (g) | 160 L/160 L | Light green to green | pH 4.5/pH 3.2 | About 2 to 30 g/L |
| Third stage of Step (g) | 160 L/70 L | Green to dark green to green | pH 3.2/pH 1.6 | > 60 g/L |
| Fourth stage of Step (g) | 70 L/70 L | Green | pH 1.6/pH 1.2 | > 30 g/L |
| Step (h) | 70 L/150 L | Green | pH 1.2/pH 1.2 | > 30 g/L |
| Step (i) | 150 L/190 L | Green | pH 1.2/pH 1.4 | > 30 g/L |
| Step (j) | 190 L/320L | Green to light green | pH 1.4/pH 0.9 | About 14 g/L |

After the step (g), the step (h), i.e., the third air-intake and drain step, was performed as described in Example 1. The spent regenerant remaining in the ion exchange resin tower 2 was discharged from the lower opening and discharged into the regenerant tank 4 through the third regenerant pipe 43. Therefore, the solution level of the regenerant tank 4 was increased from 70 L to 150 L. From the change of solution level of the regenerant tank 4, only 170 L of the fresh regenerant was consumed during the whole regeneration step. That is, the usage of the fresh regenerant (170 L) was apparently lower than the overall volume (200 L) of the ion exchange resin tower 2.

Next, the step (i), i.e., the second assistant drain step, was performed as described in Example 1, so as to discharge the spent regenerant in the ion exchange resin tower 2 into the regenerant tank 4 as much as possible. During the step, the solution level of the regenerant tank 4 was further increased from 150 L to 190 L.

Subsequently, the upper inlet pneumatic valve A and the sub-pneumatic valve C located at the pure water pipe 51 were switched on to allow the pure water in the pure water tank 5 to flow through the pure water pipe 51 and to be fed into the ion exchange resin tower 2 through the upper opening, thereby making the spent regenerant discharged out of the ion exchange resin tower 2. Herein, the solution level of the regenerant tank 4 was further increased from 190 L to 320 L.

By discharging the spent regenerant into different tanks, the nickel content of the solution collected in the regenerant recovery tank 7 of Example 3 was higher than that of Example 1, and the amount of the nickel ions contained in the rinse water collection tank 9 of Example 3 was lower than that of Example 1. Further, the concentration of the fresh regenerant used in Example 3 was also lower than that of Example 1 to complete the entire regeneration, thus the method provided in the instant example could avoid using concentrated regenerant and prevent the crystallization of the adsorbed substances at the bottom of the regenerant tank 4 and the consumption of the ion exchange resin tower 2.

Besides, the spent regenerant (304 L, about pH 1.4) collected in the regenerant tank 4 could further be mixed with 16 L and 98 wt% of concentrated sulfuric acid to increase its concentration, and then a 320 L of sulfuric acid solution (pH 0.9, contained 14 g/L of nickel ions) was prepared to be used as the fresh regenerant for the next regeneration step.

### Example 4

A similar process as described in Example 3 was performed in the instant example. The difference between Examples 3 and 4 was that the steps (b), (c), (d), (e), (f), (k), (1) of Example 3 were omitted. Without the foresaid steps, a concentrated nickel sulfate solution contained 65 g/L of nickel ions also could be collected, and the amount of the produced wastewater of the instant example merely increased with 3.5 BV compared by Example 3.

### Example 5

A similar process as described in Example 1 was performed in the instant example. The difference between Examples 1 and 5 was that the step (d) of the instant example, i.e., first rinse and backwash step, did not include the flush step.

More specifically, during the step (d) of the instant example, the pure water was fed into the ion exchange resin tower 2 through the upper opening at a flow rate of 9.3 L/min to wash the ion exchange resin tower 2 from top to bottom slowly. Then the sub-pneumatic valve C located at the second rinse water pipe 92 was switched on to allow the rinse water produced during the slow-rinse step to discharge into the rinse water collection tank 9 through the second rinse water pipe 92. The slow-rinse step was stopped until the conductivity of the rinse water decreased to 1000 µS/cm. When the conductivity of the rinse water was lower than 1000 µS/cm, the pure water was fed into the ion exchange resin tower 2 through the lower opening at a flow rate of 16 L/min to backwash the ion exchange resin tower 2 from bottom to top. The sub-pneumatic valve C located at the second wastewater pipe 62 was switched on to allow the rinse water produced during the backwash step to discharge into the wastewater treatment tank 6 through the second wastewater pipe 62. Said backwash step was stopped until the discharged rinse water became clear and substantially free of suspended solids observed by naked eyes.

Herein, the amounts of the pure water fed into the ion exchange resin tower 2 during the slow-rinse and backwash steps were recorded in the above Table 2.

### Comparative Example 1

The Comparative Example 1 performed a similar step (a) as described in Example 1, and then backwashed the ion exchange resin tower 2 from its lower opening directly without performing steps (b) and (c) as described in Example 1. The pure water was stopped to be fed until the conductivity of the rinse water discharged from the upper opening was lower than 1000 S/cm and the discharged rinse water became clear and substantially free of suspended solids observed by naked eyes.

Herein, the amount of the pure water fed into the ion exchange resin tower 2 during the backwash step was recorded in the above Table 2.

### Comparative Example 2

The Comparative Example 1 performed similar steps (a), (b), and (d) as described in Example 1. That is, the ion exchange resin tower 2 was directly washed without performing the step (c) as described in Example 1.

The step (d) of the Comparative Example 2 also comprised the flush step, the slow-rinse step, and the backwash step as described in Example 1, and the amounts of the pure water fed into the ion exchange resin tower 2 during these steps were recorded in the above Table 2.

### Discussion of results

To ensure the ion exchange resin towers 2 were fully washed before the regeneration step, all of the ion exchange resin towers 2 of Examples 1 and 5 and Comparative Examples 1 and 2 were washed with the pure water continuously until the conductivity of the rinse water discharged out of the ion exchange resin tower 2 was reduced to 1000 µS/cm. According to the results as shown in the above Table 2, only 320 L of the pure water was consumed in total during the step (d) of Example 1, and only 360 L of the pure water was consumed in total during the step (d) of Example 5. In contrast, without the first air-intake and drain step and first assistant drain step, at least 700 L of pure water was required in Comparative Example 1 to complete the wash step of the ion exchange resin tower 2. As the total amount of the pure water consumed in Comparative Example 2 indicated, 450 L of the pure water was consumed in total to complete the wash step of the ion exchange resin tower 2. Comparing the results of Example 1 with Comparative Example 2, the amount of pure water used during the flush step in Example 1 was 130 L, the amount of pure water used during the flush step in Comparative Example 1 was 550 L and the amount of pure water used during the flush step in Comparative Example 2 was 250 L. As the nickel ion contained in the ion exchange resin tower 2 was 600 grams, the nickel ion of the rinse water discharged during the flush step was 570 grams, i.e., discharging 95% of nickel ions out of the ion exchange resin tower 2. For Example 1, the nickel content of the spent regenerant discharged during the flush step was 4.4 g/L; for Comparative Example 1, the nickel content of the spent regenerant discharged during the flush step was 1.0 g/L; and for Comparative Example 2, the nickel content of the spent regenerant discharged during the flush step was 2.3 g/L.

In conclusion, the apparatus and method in accordance with the present invention are effective to reduce the total amount of the pure water for washing the ion exchange resin tower 2, reduce the produced amount of the wastewater during the process, and increase the concentration of the adsorbed substance contained in the spent regenerant. Further, the spent regenerant collected during the previous regeneration step can be mixed with another fresh and concentrated sulfuric acid to become the reusable fresh regenerant for the next regeneration step. Accordingly, the amount of the spent regenerant produced during the entire process also can be reduced, and the pollution in the environment produced by the regeneration process of the ion exchange resin is thus reduced.

## Claims

1. An apparatus for reducing regenerant and wastewater by compressed air, **characterized in that** the apparatus comprises:
a resin tower (2) having an upper opening and a lower opening opposite the upper opening, and packed with a resin material including strong acid cation exchange resin, weak acid cation exchange resin, strong base anion exchange resin, weak base anion exchange resin, selective ion exchange resin, chelating resin, or adsorber resin;
a waste fluid/tap water tank (1) connected with the upper opening or the lower opening of the resin tower (2), so as to unidirectionally supply waste fluid/tap water to the resin tower (2);
a compressed air supply (3) connected with the upper opening of the resin tower (2), so as to unidirectionally supply compressed air to the resin tower (2);
a regenerant tank (4) connected with the upper opening and the lower opening of the resin tower (2), so as to bidirectionally supply fresh regenerant to the resin tower (2) and to drain spent regenerant from the resin tower (2);
a pure water tank (5) connected with the upper opening and the lower opening of the resin tower (2), so as to unidirectionally supply pure water to the resin tower (2);
a wastewater treatment tank (6) connected with the upper opening and the lower opening of the resin tower (2), so as to unidirectionally drain wastewater out of the resin tower (2);
a regenerant recovery tank (7) connected with the upper opening of the resin tower (2), so as to unidirectionally drain spent regenerant from the resin tower (2);
a collection tank (8) connected with the regenerant recovery tank (7);
a rinse water collection tank (9) connected with the upper opening and the lower opening of the resin tower (2), so as to bidirectionally supply collected rinse water to the resin tower (2) and to drain the rinse wastewater from the resin tower (2).

2. A method for reducing regenerant and wastewater by compressed air, **characterized in that** the method employs the apparatus as claimed in claim 1 and comprises steps in the sequence set forth:
a first service step: feeding waste fluid or tap water from the waste fluid/tap water tank (1) into the resin tower (2) through the upper opening or the lower opening to allow the resin material to adsorb substances in the waste fluid or tap water and to discharge a treated water and a treated wastewater out of the resin tower (2);
a first air-intake and drain step: supplying a compressed air from the compressed air supply (3) into the resin tower (2) through the upper opening of the resin tower (2), so as to discharge the wastewater or tap water out of the resin tower (2);
a first assistant drain step: feeding pure water from the pure water tank (5) into the resin tower (2) through the upper opening of the resin tower (2), and then supplying compressed air from the compressed air supply (3) into the resin tower (2) through the upper opening of the resin tower (2), so as to discharge the waste fluid or tap water out of the resin tower (2);
a first rinse and backwash step: feeding pure water from the pure water tank (5) into the resin tower (2) through the upper opening of the resin tower (2), and then feeding pure water from the pure water tank (5) into the resin tower (2) through the lower opening of the resin tower (2), so as to rinse and backwash the resin tower (2) and to discharge a rinse wastewater and a treated wastewater;
a second air-intake and drain step: supplying compressed air from the compressed air supply (3) into the resin tower (2) through the upper opening of the resin tower (2), so as to discharge the treated wastewater out of the resin tower (2);
a first regeneration step: feeding a fresh regenerant from the regenerant tank (4) into the resin tower (2) through the upper opening or the lower opening of the resin tower (2) to produce a spent regenerant;
a third air-intake and drain step: supplying compressed air from the compressed air supply (3) into the resin tower (2) through the upper opening of the resin tower (2), so as to discharge the spent regenerant out of the resin tower (2);
a second assistant drain step: feeding pure water from the pure water tank (5) into the resin tower (2) through the upper opening of the resin tower (2), and then supplying the compressed air from the compressed air supply (3) into the resin tower (2) through the upper opening of the resin tower (2), so as to discharge the spent regenerant out of the resin tower (2);
a first rinse step: feeding pure water from the pure water tank (5) into the resin tower (2) through the upper opening of the resin tower (2), so as to rinse the spent regenerant out of the resin tower (2) and to produce the rinse wastewater;
a fourth air-intake and drain step: supplying the compressed air from the compressed air supply (3) into the resin tower (2) through the upper opening of the resin tower (2), so as to discharge the treated wastewater out of the resin tower (2);
wherein the drain method during the first service step to the fourth air-intake and drain step is performed depending on the concentration of adsorbed substances contained in a stream of the waste fluid, the treated water, the treated wastewater, the tap water, the rinse wastewater, or the spent regenerant;
wherein the concentration of the adsorbed substances contained in the drain stream discharged into the rinse water collection tank (9) is the lowest, and followed by the stream discharged into the regenerant tank (4) and the stream discharged into the regenerant recovery tank (7) in an increasing order;
wherein the stream from the regenerant recovery tank (7) is fed into the collection tank (8).

3. The method as claimed in claim 2, wherein the first assistant drain step and the second assistant drain step respectively comprise multiple cycles, and each cycle comprises the foresaid two steps of feeding pure water from the pure water tank (5) into the resin tower (2) through the upper opening of the resin tower (2) and of supplying the compressed air from the compressed air supply (3) into the resin tower (2) through the upper opening of the resin tower (2).

4. The method as claimed in claim 2, wherein a total volume of the fresh regenerant used in the first regeneration step is lower than a total volume of the resin material.

5. The method as claimed in claim 2, wherein a volume of the pure water used in the first assistant drain step or a volume of the pure water used in the second assistant drain step ranges from 0.01 vol% to 50 vol% based on the total volume of the resin material.

6. The method as claimed in claim 2, wherein the method further comprises the following steps after the fourth air-intake and drain step:
a second service step, which is a repetition of the first service step;
a fifth air-intake and drain step, which is a repetition of the first air-intake and drain step;
a third assistant drain step, which is a repetition of the first assistant drain step;
a second rinse and backwash step, which is a repetition of the first rinse and backwash step;
a sixth air-intake and drain step, which is a repetition of the second air-intake and drain step;
a second regeneration step, which is a repetition of the first regeneration step;
a seventh air-intake and drain step, which is a repetition of the third air-intake and drain step;
a fourth assistant drain step, which is a repetition of the second assistant drain step;
a second rinse step, which is a repetition of the first rinse step; and
an eighth air-intake and drain step, which is a repetition of the fourth air-intake and drain step;
wherein the fresh regenerant fed into the resin tower (2) through the lower opening or the upper opening during the second regeneration step includes the spent regenerant recovered from the first regeneration step to the first rinse step.

7. The method as claimed in claim 6, wherein the method comprises a step of recycling the rinse wastewater to obtain a recycled rinse wastewater, and the second service step comprises a step of feeding the recycled rinse wastewater into the resin tower (2) to allow the resin material to adsorb substances in the recycled rinse wastewater.

8. The method as claimed in any one of claims 2 to 7, wherein the first regeneration step comprises a step of discharging the spent regenerant into the rinse water collection tank (9), the regenerant tank (4) or the regenerant recovery tank (7).

9. The method as claimed in any one of claims 2 to 7, wherein the first rinse step comprises a step of discharging the wastewater into the regenerant tank (4) and the rinse water collection tank (9).

## Patentansprüche

1. Vorrichtung zum Verringern von Regenerierungsmittel und Abwasser durch Druckluft, **dadurch gekennzeichnet, dass** die Vorrichtung umfasst:
einen Harzturm (2) mit einer oberen Öffnung und mit einer unteren Öffnung, die der oberen Öffnung gegenüberliegt, und der mit einem Harzmaterial gepackt ist, das ein stark saures Kationenaustauschharz, ein schwach saures Kationenaustauschharz, ein stark basisches Anionenaustauschharz, ein schwach basisches Anionenaustauschharz, ein selektives Ionenaustauschharz, ein komplexbildendes Harz oder ein Adsorberharz enthält;
einen Abfallfluid-/Leitungswasserbehälter (1), der mit der oberen Öffnung oder mit der unteren Öffnung des Harzturms (2) in der Weise verbunden ist, dass dem Harzturm (2) in einer Richtung Abfallfluid/Leitungswasser zugeführt wird;
eine Druckluftzufuhr (3), die in der Weise mit der oberen Öffnung des Harzturms (2) verbunden ist, dass dem Harzturm (2) in einer Richtung Druckluft zugeführt wird;
einen Regenerierungsmittelbehälter (4), der in der Weise mit der oberen Öffnung und mit der unteren Öffnung des Harzturms (2) verbunden ist, dass dem Harzturm (2) in beiden Richtungen frisches Regenerierungsmittel zugeführt wird und verbrauchtes Regenerierungsmittel aus dem Harzturm (2) entleert wird;
einen Reinwasserbehälter (5), der in der Weise mit der oberen Öffnung und mit der unteren Öffnung des Harzturms (2) verbunden ist, dass dem Harzturm (2) in einer Richtung Reinwasser zugeführt wird;
einen Abwasserbehandlungsbehälter (6), der in der Weise mit der oberen Öffnung und mit der unteren Öffnung des Harzturms (2) verbunden ist, dass aus dem Harzturm (2) in einer Richtung Abwasser entleert wird;
einen Regenerierungsmittel-Rückgewinnungsbehälter (7), der in der Weise mit der oberen Öffnung des Harzturms (2) verbunden ist, dass verbrauchtes Regenerierungsmittel in einer Richtung aus dem Harzturm (2) entleert wird;
einen Sammelbehälter (8), der mit dem Regenerierungsmittel-Rückgewinnungsbehälter (7) verbunden ist;
einen Spülwassersammelbehälter (9), der in der Weise mit der oberen Öffnung und mit der oberen Öffnung des Harzturms (2) verbunden ist, dass dem Harzturm (2) in beiden Richtungen gesammeltes Spülwasser zugeführt wird und das Spülabwasser aus dem Harzturm (2) entleert wird.

2. Verfahren zum Verringern von Regenerierungsmittel und Abwasser durch Druckluft, **dadurch gekennzeichnet, dass** das Verfahren die Vorrichtung gemäß Anspruch 1 nutzt und die folgenden Schritte in der dargelegten Reihenfolge umfasst:
einen ersten Wartungsschritt: Einspeisen von Abfallfluid oder Leitungswasser aus dem Abfallfluid-/Leitungswasserbehälter (1) in den Harzturm (2) durch die obere Öffnung oder durch die untere Öffnung, um zu ermöglichen, dass Harzmaterial Substanzen in dem Abfallfluid oder in dem Leitungswasser adsorbiert, und um behandeltes Wasser und behandeltes Abwasser aus dem Harzturm (2) abzulassen;
einen ersten Lufteinlass- und Entleerungsschritt: Zuführen einer Druckluft von der Druckluftzufuhr (3) in den Harzturm (2) durch die obere Öffnung des Harzturms (2), um das Abwasser oder das Leitungswasser aus dem Harzturm (2) abzulassen;
einen ersten Hilfsentleerungsschritt: Einspeisen von Reinwasser aus dem Reinwasserbehälter (5) in den Harzturm (2) durch die obere Öffnung des Harzturms (2) und daraufhin Zuführen von Druckluft von der Druckluftzufuhr (3) in den Harzturm (2) durch die obere Öffnung des Harzturms (2), um das Abfallfluid oder das Leitungswasser aus dem Harzturm (2) abzulassen;
einen ersten Spül- und Rückspülschritt: Einspeisen von Reinwasser aus dem Reinwasserbehälter (5) in den Harzturm (2) durch die obere Öffnung des Harzturms (2) und daraufhin Einspeisen von Reinwasser aus dem Reinwasserbehälter (5) in den Harzturm (2) durch die untere Öffnung des Harzturms (2), um den Harzturm (2) zu spülen und rückzuspülen und um ein Spülabwasser und ein behandeltes Abwasser abzulassen;
einen zweiten Lufteinlass- und Entleerungsschritt: Zuführen von Druckluft von der Druckluftzufuhr (3) in den Harzturm (2) durch die obere Öffnung des Harzturms (2), um das behandelte Abwasser aus dem Harzturm (2) abzulassen;
einen ersten Regenerierungsschritt: Einspeisen eines frischen Regenerierungsmittels aus dem Regenerierungsmittelbehälter (4) in den Harzturm (2) durch die obere Öffnung oder durch die untere Öffnung des Harzturms (2), um ein verbrauchtes Regenerierungsmittel zu erzeugen;
einen dritten Lufteinlass- und Entleerungsschritt: Zuführen von Druckluft von der Druckluftzufuhr (3) in den Harzturm (2) durch die obere Öffnung des Harzturms (2), um das verbrauchte Regenerierungsmittel aus dem Harzturm (2) abzulassen;
einen zweiten Hilfsentleerungsschritt: Einspeisen von Reinwasser aus dem Reinwasserbehälter (5) in den Harzturm (2) durch die obere Öffnung des Harzturms (2) und daraufhin Zuführen der Druckluft von der Druckluftzufuhr (3) in den Harzturm (2) durch die obere Öffnung des Harzturms (2), um das verbrauchte Regenerierungsmittel aus dem Harzturm (2) abzulassen;
einen ersten Spülschritt: Einspeisen von Reinwasser aus dem Reinwasserbehälter (5) in den Harzturm (2) durch die obere Öffnung des Harzturms (2), um das verbrauchte Regenerierungsmittel aus dem Harzturm (2) zu spülen und um das Spülabwasser zu erzeugen;
einen vierten Lufteinlass- und Entleerungsschritt: Zuführen der Druckluft von der Druckluftzufuhr (3) in den Harzturm (2) durch die obere Öffnung des Harzturms (2), um das behandelte Abwasser aus dem Harzturm (2) abzulassen;
wobei das Entleerungsverfahren während des ersten Wartungsschritts bis zu dem vierten Lufteinlass- und Entleerungsschritt in Abhängigkeit von der Konzentration adsorbierter Substanzen, die in einem Strom des Abfallfluids, des behandelten Wassers, des behandelten Abwassers, des Leitungswassers, des Spülabwassers oder des verbrauchten Regenerierungsmittels enthalten sind, ausgeführt wird;
wobei die Konzentration der adsorbierten Substanzen, die in dem Entleerungsstrom enthalten sind, der in den Spülwassersammelbehälter (9) abgelassen wird, am niedrigsten ist, und in zunehmender Ordnung gefolgt von dem Strom, der in den Regenerierungsmittelbehälter (4) abgelassen wird, und von dem Strom, der in den Rückgewinnungsbehälter (7) abgelassen wird;
wobei der Strom von dem Regenerierungsmittel-Rückgewinnungsbehälter (7) in den Sammelbehälter (8) eingespeist wird.

3. Verfahren gemäß Anspruch 2, wobei der erste Hilfsentleerungsschritt bzw. der zweite Hilfsentleerungsschritt mehrere Zyklen umfasst und wobei jeder Zyklus die oben erwähnten zwei Schritte des Einspeisens von Reinwasser aus dem Reinwasserbehälter (5) in den Harzturm (2) durch die obere Öffnung des Harzturms (2) und des Zuführens der Druckluft von der Druckluftzufuhr (3) in den Harzturm (2) durch die obere Öffnung des Harzturms (2) umfasst.

4. Verfahren gemäß Anspruch 2, wobei ein Gesamtvolumen des in dem ersten Regenerierungsschritt verwendeten frischen Regenerierungsmittels kleiner als ein Gesamtvolumen des Harzmaterials ist.

5. Verfahren gemäß Anspruch 2, wobei ein Volumen des in dem ersten Hilfsentleerungsschritt verwendeten Reinwassers oder ein Volumen des in dem zweiten Hilfsentleerungsschritt verwendeten Reinwassers in dem Bereich von 0,01 Vol.-% bis 50 Vol.-% auf der Grundlage des Gesamtvolumens des Harzmaterials liegt.

6. Verfahren gemäß Anspruch 2, wobei das Verfahren nach dem vierten Lufteinlass- und Entleerungsschritt ferner die folgenden Schritte umfasst:
einen zweiten Wartungsschritt, der eine Wiederholung des ersten Wartungsschritts ist;
einen fünften Lufteinlass- und Entleerungsschritt, der eine Wiederholung des ersten Lufteinlass- und Entleerungsschritts ist;
einen dritten Hilfsentleerungsschritt, der eine Wiederholung des ersten Hilfsentleerungsschritts ist;
einen zweiten Spül- und Rückspülschritt, der eine Wiederholung des ersten Spül- und Rückspülschritts ist;
einen sechsten Lufteinlass- und Entleerungsschritt, der eine Wiederholung des zweiten Lufteinlass- und Entleerungsschritts ist;
einen zweiten Regenerierungsschritt, der eine Wiederholung des ersten Regenerierungsschritts ist;
einen siebenten Lufteinlass- und Entleerungsschritt, der eine Wiederholung des dritten Lufteinlass- und Entleerungsschritts ist;
einen vierten Hilfsentleerungsschritt, der eine Wiederholung des zweiten Hilfsentleerungsschritts ist;
einen zweiten Spülschritt, der eine Wiederholung des ersten Spülschritts ist; und
einen achten Lufteinlass- und Entleerungsschritt, der eine Wiederholung des vierten Lufteinlass- und Entleerungsschritts ist;
wobei das frische Regenerierungsmittel, das während des zweiten Regenerierungsschritts durch die untere Öffnung oder durch die obere Öffnung in den Harzturm (2) eingespeist wird, das verbrauchte Regenerierungsmittel enthält, das von dem ersten Regenerierungsschritt bis zu dem ersten Spülschritt zurückgewonnen wird.

7. Verfahren gemäß Anspruch 6, wobei das Verfahren einen Schritt des Wiederverwendens des Spülabwassers, um ein wiederverwendetes Spülabwasser zu erhalten, umfasst und wobei der zweite Wartungsschritt einen Schritt des Einspeisens des wiederverwendeten Spülabwassers in den Harzturm (2), um zu ermöglichen, dass das Harzmaterial Substanzen in dem wiederverwendeten Spülabwasser adsorbiert, umfasst.

8. Verfahren gemäß einem der Ansprüche 2 bis 7, wobei der erste Regenerierungsschritt einen Schritt des Ablassens des verbrauchten Regenerierungsmittels in den Spülwassersammelbehälter (9), in den Regenerierungsmittelbehälter (4) oder in den Regenerierungsmittel-Rückgewinnungsbehälter (7) umfasst.

9. Verfahren gemäß einem der Ansprüche 2 bis 7, wobei der erste Spülschritt einen Schritt des Ablassens des Abwassers in den Regenerierungsmittelbehälter (4) und in den Spülwassersammelbehälter (9) umfasst.

## Revendications

1. Appareil de réduction de régénérant et des eaux usées par de l'air comprimé, **caractérisé en ce que** l'appareil comprend :
une tour à résine (2) ayant une ouverture supérieure et une ouverture inférieure opposée à l'ouverture supérieure et rempli avec une matière à base de résine comprenant une résine échangeuse de cations fortement acide, une résine échangeuse de cations faiblement acide, une résine échangeuse d'anions fortement basique, une résine échangeuse d'anions faiblement basique, une résine échangeuse d'ions sélective, une résine chélatante ou une résine adsorbante;
un réservoir de fluide résiduaire/d'eau de distribution (1) connecté à l'ouverture supérieure ou l'ouverture inférieure de la tour à résine (2), de manière à délivrer de manière unidirectionnelle le fluide résiduaire/l'eau de distribution à la tour à résine (2) ;
une alimentation d'air comprimé (3) connectée à l'ouverture supérieure de la tour à résine (2), de manière à délivrer de manière unidirectionnelle l'air comprimé à la tour à résine (2) ;
un réservoir de régénérant (4) connecté à l'ouverture supérieure et à l'ouverture inférieure de la tour à résine (2), de manière à délivrer de manière bidirectionnelle le régénérant frais à la tour à résine (2) et à évacuer le régénérant épuisé de la tour à résine (2) ;
un réservoir d'eau pure (5) connecté à l'ouverture supérieure et à l'ouverture inférieure de la tour à résine (2), de manière à délivrer de manière unidirectionnelle l'eau pure à la tour à résine (2) ;
un réservoir de traitement des eaux usées (6) connecté à l'ouverture supérieure et à l'ouverture inférieure de la tour à résine (2), de manière à évacuer de manière unidirectionnelle les eaux usées hors de la tour à résine (2) ;
un réservoir de récupération de régénérant (7) connecté à l'ouverture supérieure de la tour à résine (2), de manière à évacuer de manière unidirectionnelle le régénérant épuisé de la tour à résine (2) ;
un réservoir de collecte (8) connecté au réservoir de récupération de régénérant (7) ;
un réservoir de collecte d'eau de rinçage (9) connecté à l'ouverture supérieure et à l'ouverture inférieure de la tour à résine (2), de manière à délivrer de manière bidirectionnelle l'eau de rinçage collectée à la tour à résine (2) et à évacuer l'eau résiduaire de rinçage de la tour à résine (2).

2. Procédé de réduction de régénérant et des eaux usées par de l'air comprimé, **caractérisé en ce que** le procédé utilise l'appareil selon la revendication 1 et comprend des étapes dans la séquence énoncée :
une première étape de service : l'alimentation de fluide résiduaire ou d'eau de distribution à partir d'un réservoir de fluide résiduaire/d'eau de distribution (1) dans la tour à résine (2) à travers l'ouverture supérieure ou l'ouverture inférieure pour permettre à la matière à base de résine d'adsorber des substances dans le fluide résiduaire ou l'eau de distribution et de décharger une eau traitée et une eau résiduaire traitée hors de la tour à résine (2) ;
une première étape d'admission d'air et d'évacuation : l'alimentation d'air comprimé à partir de l'alimentation d'air comprimé (3) dans la tour à résine (2) à travers l'ouverture supérieure de la tour à résine (2), de manière à décharger les eaux usées ou l'eau de distribution hors de la tour à résine (2) ;
une première étape d'évacuation d'assistance : l'alimentation d'eau pure à partir du réservoir d'eau pure (5) dans la tour à résine (2) à travers l'ouverture supérieure de la tour à résine (2), et ensuite l'alimentation d'air comprimé à partir de l'alimentation d'air comprimé (3) dans la tour à résine (2) à travers l'ouverture supérieure de la tour à résine (2), de manière à décharger le fluide résiduaire ou l'eau de distribution hors de la tour à résine (2) ;
une étape de rinçage et de lavage à contre-courant : l'alimentation d'eau pure à partir du réservoir d'eau pure (5) dans la tour à résine (2) à travers l'ouverture supérieure de la tour à résine (2), et ensuite l'alimentation d'eau pure à partir du réservoir d'eau pure (5) dans la tour à résine (2) à travers l'ouverture inférieure de la tour à résine (2), de manière à rincer et laver à contre-courant la tour à résine (2) et à décharger une eau résiduaire de rinçage et des eaux usées traitées ;
une deuxième étape d'admission d'air et d'évacuation : l'alimentation d'air comprimé à partir de l'alimentation d'air comprimé (3) dans la tour à résine (2) à travers l'ouverture supérieure de la tour à résine (2), de manière à décharger les eaux usées traitées hors de la tour à résine (2) ;
une première étape de régénération : l'alimentation d'un régénérant frais à partir du réservoir de régénérant (4) dans la tour à résine (2) à travers l'ouverture supérieure ou l'ouverture inférieure de la tour à résine (2) pour produire un régénérant épuisé ;
une troisième étape d'admission d'air et d'évacuation : l'alimentation d'air comprimé à partir de l'alimentation d'air comprimé (3) dans la tour à résine (2) à travers l'ouverture supérieure de la tour à résine (2), de manière à décharger le régénérant épuisé hors de la tour à résine (2) ;
une deuxième étape d'évacuation d'assistance : l'alimentation d'eau pure à partir du réservoir d'eau pure (5) dans la tour à résine (2) à travers l'ouverture supérieure de la tour à résine (2), et ensuite l'alimentation d'air comprimé à partir de l'alimentation d'air comprimé (3) dans la tour à résine (2) à travers l'ouverture supérieure de la tour à résine (2), de manière à décharger le régénérant épuisé hors de la tour à résine (2) ;
une première étape de rinçage ; l'alimentation d'eau pure à partir du réservoir d'eau pure (5) dans la tour à résine (2) à travers l'ouverture supérieure de la tour à résine (2), de manière à rincer le régénérant épuisé hors de la tour à résine (2) et produire de l'eau résiduaire de rinçage ;
une quatrième étape d'admission d'air et d'évacuation : l'alimentation d'air comprimé à partir de l'alimentation d'air comprimé (3) dans la tour à résine (2) à travers l'ouverture supérieure de la tour à résine (2), de manière à décharger l'eau résiduaire traitée hors de la tour à résine (2) ;
dans lequel le procédé d'évacuation durant la première étape de service à la quatrième étape d'admission d'air et d'évacuation est effectué en fonction de la concentration de substances adsorbées contenues dans un flux du fluide résiduaire, de l'eau traitée, des eaux usées traitées, de l'eau de distribution, de l'eau résiduaire de rinçage ou du régénérant épuisé ;
dans lequel la concentration des substances adsorbées contenues dans le flux d'évacuation déchargé dans le réservoir de collecte d'eau de rinçage (9) est la plus basse, et suivie par le flux déchargé dans le réservoir de régénérant (4) et le flux déchargé dans le réservoir de récupération de régénérant (7) dans un ordre croissant ;
dans lequel le flux provenant du réservoir de récupération de régénérant (7) est acheminé dans le réservoir de collecte (8).

3. Procédé selon la revendication 2, dans lequel la première étape d'évacuation d'assistance et la deuxième étape d'évacuation d'assistance comprennent respectivement de multiples cycles et chaque cycle comprend les deux étapes précitées d'alimentation d'eau pure à partir du réservoir d'eau pure (5) dans la tour à résine (2) à travers l'ouverture supérieure de la tour à résine (2) et d'alimentation d'air comprimé à partir de l'alimentation d'air comprimé (3) dans la tour à résine (2) à travers l'ouverture supérieure de la tour à résine (2).

4. Procédé selon la revendication 2, dans lequel un volume total du régénérant frais utilisé dans la première étape de régénération est inférieur à un volume total de la matière à base de résine.

5. Procédé selon la revendication 2, dans lequel un volume de l'eau pure utilisée dans la première étape d'évacuation d'assistance ou un volume de l'eau pure utilisée dans la deuxième étape d'évacuation d'assistance est dans la plage de 0,01 % en volume à 50 % en volume sur la base du volume total de la matière à base de résine.

6. Procédé selon la revendication 2, dans lequel le procédé comprend en outre les étapes suivantes après la quatrième étape d'admission d'air et d'évacuation :
une deuxième étape de service, qui est une répétition de la première étape de service ;
une cinquième étape d'admission d'air et d'évacuation, qui est une répétition de la première étape d'admission d'air et d'évacuation ;
une troisième étape d'évacuation d'assistance, qui est une répétition de la première étape d'évacuation d'assistance ;
une deuxième étape de rinçage et de lavage à contre-courant, qui est une répétition de la première étape de rinçage et de lavage à contre-courant ;
une sixième étape d'admission d'air et d'évacuation, qui est une répétition de la deuxième étape d'admission d'air et d'évacuation ;
une deuxième étape de régénération, qui est une répétition de la première étape de régénération ;
une septième étape d'admission d'air et d'évacuation, qui est une répétition de la troisième étape d'admission d'air et d'évacuation ;
une quatrième étape d'évacuation d'assistance, qui est une répétition de la deuxième étape d'évacuation d'assistance ;
une deuxième étape de rinçage, qui est une répétition de la première étape de rinçage ; et
une huitième étape d'admission d'air et d'évacuation, qui est une répétition de la quatrième étape d'admission d'air et d'évacuation ;
dans lequel le réfrigérant frais alimenté dans la tour à résine (2) à travers l'ouverture inférieure ou l'ouverture supérieure durant la deuxième étape de régénération comprend le régénérant épuisé récupéré de la première étape de régénération à la première étape de rinçage.

7. Procédé selon la revendication 6, dans lequel le procédé comprend une étape de recyclage de l'eau résiduaire de rinçage pour obtenir une eau résiduaire de rinçage recyclée, et la deuxième étape de service comprend une étape d'alimentation de l'eau résiduaire de rinçage recyclée dans tour à résine (2) pour permettre à la matière à base de résine d'adsorber des substances dans l'eau résiduaire de rinçage recyclée.

8. Procédé selon l'une quelconque des revendications 2 à 7, dans lequel la première étape de régénération comprend une étape de décharge du régénérant épuisé dans le réservoir de collecte d'eau de rinçage (9), le réservoir de régénérant (4) ou le réservoir de récupération de régénérant (7).

9. Procédé selon l'une quelconque des revendications 2 à 7, dans lequel la première étape de rinçage comprend une étape de décharge des eaux usées dans le réservoir de régénérant (4) et le réservoir de collecte d'eau de rinçage (9).
